# EUROPÄISCHE PATENTSCHRIFT

(11) **EP 1 778 521 B1**
(45) Veröffentlichungstag und Bekanntmachung des Hinweises auf die Patenterteilung: **23.04.2008**
(21) Anmeldenummer: 05757022.8
(22) Anmeldetag: 18.06.2005
(51) Int. Cl.: B60N 2/56

(54) **LUFTVERSORGUNGSEINRICHTUNG FÜR EINEN FAHRZEUGSITZ SOWIE VERFAHREN ZUM BETREIBEN DERSELBEN**
AIR SUPPLY MECHANISM FOR A SEAT, AND METHOD FOR THE OPERATION THEREOF
SYSTÈME D'ALIMENTATION EN AIR POUR UN SIÈGE DE VÉHICULE ET PROCÉDÉ POUR SON FONCTIONNEMENT

(30) Priorität: 25.06.2004 DE 102004030705
(43) Veröffentlichungstag der Anmeldung: 02.05.2007
(73) Patentinhaber: Daimler AG, 70327 Stuttgart (DE)
(72) Erfinder: HARTMANN, Dietmar, 75392 Deckenpfronn (DE); PFAHLER, Karl, 70180 Stuttgart (DE); RENNER, Lothar, 71154 Nufringen (DE)
(74) Vertreter: Wagner, Jürgen
(86) Internationale Anmeldenummer: PCT/EP2005/006613
(87) Internationale Veröffentlichungsnummer: WO 2006/000362

(56) Entgegenhaltungen:
- WO-A-03/106215

## Beschreibung

Die Erfindung betrifft eine Luftversorgungseinrichtung für einen Fahrzeugsitz nach dem Oberbegriff von Patentanspruch 1 sowie ein Verfahren zum Betreiben derselben.

Aus der DE 102 26 008 A1 ist eine Luftversorgungseinrichtung für einen Fahrzeugsitz eines offenen Kraftfahrzeugs entsprechend dem Oberbegriff des Anspruchs 1 bekannt mit wenigstens einer im oberen Bereich des Fahrzeugsitzes vorgesehenen Luftausströmöffnung, über die der Kopf-, Schulter- und Nackenbereich des Sitzinsassen zur Verminderung von unerwünschten Zuglufterscheinungen mit einem Luftstrom beaufschlagbar ist. Dabei ist der Luftstrom mittels einer Steuereinrichtung regelbar und wird bei eingeschalteter Luftversorgungseinrichtung in Abhängigkeit von einem automatisch erfassten äußeren Parameterwert, beispielsweise einer Außentemperatur, oder einem vom Sitzinsassen wählbaren Vorgabewert auf einen zugeordneten Grundwert eingestellt, von dem aus eine weitere Einstellung des Luftstroms in Abhängigkeit von einem automatisch erfassten weiteren Parameterwert, beispielsweise der Fahrgeschwindigkeit erfolgt. Die beiden Parameterwerte dienen zur Einstellung eines niedrigen, mittleren oder hohen Grundwerts des Luftstroms, der bestimmt ist durch eine zugeordnete Lüfterdrehzahl des Gebläses und eine zugeordnete Heizleistung des Heizelements. Ausgehend von diesem Grundwert erfolgt die Einstellung des Luftstroms dann in Abhängigkeit von der Fahrgeschwindigkeit derart, dass bei ansteigender Fahrgeschwindigkeit der Luftstrom und damit die Lüfterdrehzahl und die Heizleistung des Heizelements erhöht wird und umgekehrt.

Bei dem vorstehend beschriebenen herkömmlichen Fahrzeugsitz mit Sitzheizung und Belüftungsvorrichtung (Luftversorgungseinrichtung) besteht jedoch das Problem, dass bei einem Einschalten der Luftversorgungseinrichtung Sitzheizung und Belüftungsvorrichtung aktiviert werden und dadurch unmittelbar nach dem Einschalten kühlere Luft an Schulter und Nackenbereich des Sitzinsassen gelangen, da das Heizelement noch nicht die volle Heizleistung besitzt, was zu einem Zugempfinden beim Sitzinsassen und damit zu einer Komforteinbuße führt.

Weiterhin ist aus der DE 198 42 979 C1 ein Fahrzeugsitz mit Sitzheizung und Belüftungsvorrichtung bekannt, bei das Steuergerät bei jedem Einschalten der Sitzheizung zugleich die Belüftungseinrichtung für eine festgelegte Zeitspanne nach dem Einschalten der Sitzheizung aktiviert. Dabei werden die Sitzheizung und die Belüftungsvorrichtung mit voller Leistung eingeschaltet und die Leistung der Belüftungsvorrichtung wird innerhalb der Zeitspanne asymptotisch auf einen vorgegebenen Endwert reduziert. Dieser Endwert kann entweder Null sein oder ein je nach Wärmeempfinden manuell vorgegebener Wert. Dadurch wird eine gezielte Kombination von Sitzbeheizen und Sitzbelüften in der Aufheizphase des Fahrzeugsitzes erreicht, durch die die Aufheizgeschwindigkeit des Polsters gegenüber der reinen Sitzbeheizung verdoppelt wird. Die Sitzheizung besteht aus einer Mehrzahl von elektrischen Heizdrähten, die in einer Bezugsfüllung des Polsters eingelegt sind. Die Belüftungsvorrichtung weist eine Mehrzahl von Miniaturlüftern auf, die in im Polster integrierten Luftkanälen angeordnet sind und Luft aus dem unterhalb des Fahrzeugsitzes befindlichen Bereich des Fahrzeuginnenraums ansaugen und in eine Ventilationsschicht des Polsters, die unterhalb der Bezugsfüllung liegt, einblasen.

Die DE 197 03 516 C1 offenbart einen Fahrzeugsitz mit Sitzheizung und Belüftungsvorrichtung, bei dem das Steuergerät eingangsseitig mit einem im Polster angeordneten Temperaturfühler und ausgangsseitig mit der Sitzheizung und der Belüftungsvorrichtung verbunden ist. Die Belüftungsvorrichtung wiest eine Mehrzahl von in einer Polsterauflage integrierten Miniaturlüftern auf, die Luft aus dem unterhalb des Fahrzeugsitzes befindlichen Bereich des Fahrzeuginnenraums ansaugen und in eine die Polsterauflage überspannende Ventilationsschicht aus einem Abstandsgewirk einblasen. Die Sitzheizung besteht aus einer Mehrzahl von Heizwendeln, die jeweils einem Miniaturlüfter zugeordnet und mit diesem in jeweils einem Luftkanal angeordnet sind, der in der Polsterauflage ausgebildet ist. Das Steuergerät steuert die Belüftungsvorrichtung und die Sitzheizung abhängig von einer aktuellen Polstertemperatur und einer vorgegebenen Soll-Polstertemperatur in verschiedenen Kombinationen von Lüfter- und Heizstufen an.

Bei einem aus der DE 199 53 385 A1 bekannten Fahrzeugsitz mit Sitzheizung und Belüftungseinrichtung ist eine Bedieneinrichtung zur manuellen Betätigung der Sitzheizung und der Belüftungseinrichtung vorgesehen. Bei manuell eingeschalteter Belüftungseinrichtung regelt das Steuergerät die Sitzheizung automatisch in Abhängigkeit von der Temperatur der Sitzoberfläche. Die Belüftungsvorrichtung und die Sitzheizung sind mittels der Bedieneinrichtung stufenweise und/oder stufenlos schaltbar. Die Regelung erfolgt innerhalb der vom Benutzer über die Bedieneinrichtung einstellten definierten Grenzen. Zusätzlich wird sichergestellt, dass keine Unterkühlung durch die Belüftungseinrichtung erfolgt, indem bei eingeschalteter Belüftungseinrichtung die Heizeinrichtung zur Beheizung des Fahrzeugsitzes automatisch in Abhängigkeit von der Sitzoberflächentemperatur geregelt wird.

Auch bei diesen herkömmlichen Fahrzeugsitzen mit Sitzheizung und Belüftungsvorrichtung entsteht beim Sitzinsassen aufgrund der Tatsache, dass das Heizelement bei Einschalten von Sitzheizung und Belüftungsvorrichtung noch nicht die volle Heizleistung besitzt, ein Zugempfinden, insbesondere in dem Fall, in dem die Belüftungsvorrichtung zunächst auf der höchsten Stufe betrieben und dann langsam auf einen vorgegebenen Wert heruntergeschaltet wird.

Daher ist es Aufgabe der vorliegenden Erfindung, eine Luftversorgungseinrichtung für einen Fahrzeugsitz sowie ein Verfahren zum Betreiben derselben derart weiterzubilden, dass auch unmittelbar nach dem Einschalten der Luftversorgungseinrichtung kein Zugempfinden beim Sitzinsassen auftritt.

Erfindungsgemäß wird diese Aufgabe durch eine Luftversorgungseinrichtung für einen Fahrzeugsitz mit den Merkmalen von Patentanspruch 1 sowie ein Verfahren zum Betreiben einer Luftversorgungseinrichtung für einen Fahrzeugsitz mit den Merkmalen von Patentanspruch 6 gelöst. In den Unteransprüchen sind vorteilhafte Weiterbildungen der Erfindung angegeben.

Durch die erfindungsgemäße Vorkonditionierung eines Heizelements, bevor die Luftversorgungseinrichtung für einen Fahrzeugsitz eingeschaltet wird, ist die ausströmende Luft direkt bei Einschalten der Luftversorgungseinrichtung angenehm temperiert. Dadurch verspürt der Sitzinsasse sofort bei Einschalten einer Belüftung eine angenehme Wärme und es entsteht auch kein Zugempfinden.

Diese und weitere Aufgaben, Merkmale und Vorteile der vorliegenden Erfindung werden aus der nachfolgenden Beschreibung eines bevorzugten Ausführungsbeispiels in Verbindung mit der Zeichnung offensichtlich.

Dabei zeigen:
- Fig. 1: eine schematische Perspektivansicht auf Teile einer Rückenlehne eines Fahrzeugsitzes, in die eine erfindungsgemäße Luftversorgungsseinrichtung integriert ist,
- Fig. 2: eine erfindungsgemäße Heizkennlinie sowie den zugehörigen Verlauf der Temperatur der Ausblasluft,
- Fig. 3: ein Ablaufdiagramm eines erfindungsgemäßen Verfahrens zum Betreiben einer Luftversorgungseinrichtung für einen Fahrzeugsitz.

Nachfolgend wird nun die erfindungsgemäße Luftversorgungseinrichtung für einen Fahrzeugsitz und das erfindungsgemäße Verfahren zum Betreiben derselben anhand eines bevorzugten Ausführungsbeispiels näher beschrieben.

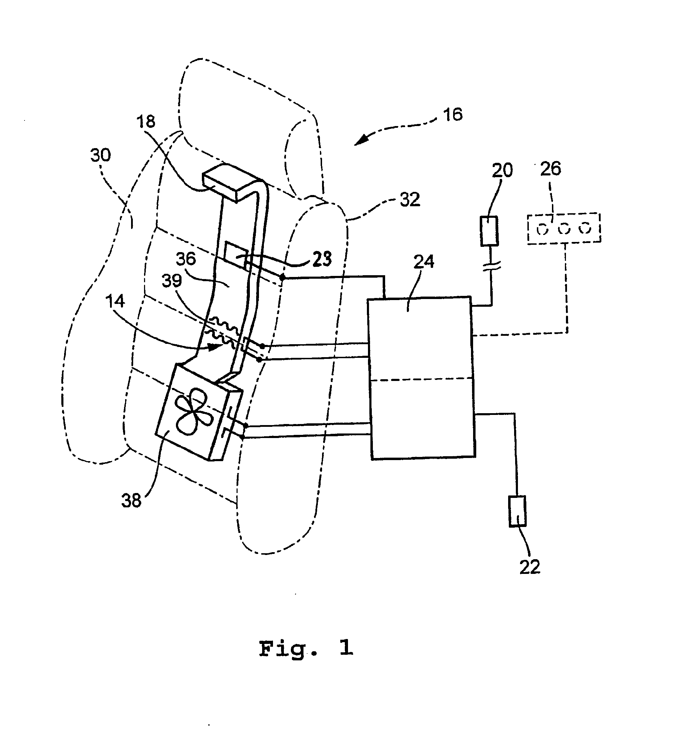

In Fig. 1 sind in schematischer Perspektivansicht Teile einer Rückenlehne 16 eines Fahrzeugsitzes 12 dargestellt, in die eine erfindungsgemäße Luftversorgungseinrichtung 14 integriert ist. Von der Rückenlehne 16 des Fahrzeugsitzes 12 sind ein Lehnenrahmen 30 und eine rückwärtige Verkleidung 32 erkennbar. Innerhalb der Rückenlehne 16 ist eine Kanalanordnung 36 der Luftversorgungseinrichtung 14 angeordnet. Der Kanalanordnung 36 ist ein von einem Gehäuse aufgenommenes Gebläse 38 vorgeschaltet, dessen Luftansaugung an der Rückseite der Rückenlehne 16 erfolgt. Außerdem ist innerhalb der Kanalanordnung 36 ein dem Gebläse 38 nachgeschaltetes Heizelement 39 angeordnet, das über eine Steuereinrichtung 24 steuerbar ist und mit dem der Luftstrom der Luftversorgungseinrichtung 14 temperiert werden kann. Im Bereich der in Fig. 1 nicht gezeigten Kopfstütze mündet die Kanalanordnung 36 in eine Luftausströmöffnung 18, durch die der temperierte Luftstrom in Richtung des Kopf-, Schulter- und Nackenbereichs des Sitzinsassen austritt, um die beispielsweise beim Fahren mit offenem Verdeck entstehenden Zuglufterscheinungen erheblich zu vermindern. Die Luftausströmöffnung 18 endet etwa flächenbündig integriert an der Vorderseite der Kopfstütze.

Die Luftversorgungseinrichtung 14 ist sowohl mit einem Sensor 20 zum Erfassen der Außentemperatur als auch mit einem Sensor 22 zum Erfassen der Fahrgeschwindigkeit verbunden. Die beiden Sensoren 20, 22 sind mit der beispielsweise innerhalb des Fahrzeugsitzes 12 angeordneten Steuereinrichtung 24 verbunden, über die die Regelung des aus der Luftausströmöffnung 18 austretenden Luftstroms auf im weiteren noch beschriebene Weise erfolgt. Zudem ist im Innenraum des Kraftwagens eine Regelungseinrichtung 26 vorgesehen, die mit der Steuereinrichtung 24 verbunden ist und über die der Sitzinsasse eine Einstellung des Luftstroms vornehmen kann. Das Erfassen der Fahrgeschwindigkeit erfolgt in dem hier gezeigten Ausführungsbeispiel durch ein ohnehin vorhandenes ABS-Steuergerät, das die momentane Fahrgeschwindigkeit in ein elektronisches Signal umwandelt und an die Steuereinrichtung 24 übermittelt. Das Erfassen der Außentemperatur kann durch einen ohnehin vorhandenen Temperatursensor 20 zum Anzeigen der Temperatur im Cockpit erfolgen, wobei die Temperatur in ein elektronisches Signal umgewandelt und an die Steuereinrichtung 24 im Fahrzeugsitz 12 übermittelt wird.

Bekannt ist es, sobald die Steuereinrichtung 24 ein Einschaltsignal für die Luftversorgungseinrichtung, beispielsweise manuell aufgrund einer Schalterbetätigung durch den Insassen, empfängt, das Heizelement 39 einzuschalten und gleichzeitig einen beispielsweise in die Steuereinrichtung 24 integrierten Timer zu starten. Dieser Timer läuft dann für eine Totzeit t_{TOT} und nach Ablauf dieser Totzeit t_{TOT} wird ein Signal an die Steuereinrichtung 24 abgegeben. Die Totzeit t_{TOT} ist derart bemessen, dass eine Zeitdifferenz zwischen einem Einschalten der Luftversorgungseinrichtung für einen Fahrzeugsitz und einem ersten Spüren eines Luftstroms möglichst kurz bemessen ist, aber dennoch die Temperatur des Luftstroms für den Sitzinsassen annehmbar ist und hängt u.a. vom verwendeten Heizelement 39 ab. Auf das Signal nach Ablauf der Totzeit t_{TOT} hin wird das Gebläse 38 durch die Steuereinrichtung 24 angesteuert. Dabei erfolgt die Ansteuerung des Gebläses 38 durch die Steuereinrichtung 24 auf einen vorbestimmten Arbeitspunkt G₀ anhand eines automatisch erfassten äußeren Parameterwerts, wie beispielsweise der Außentemperatur, und auch während des Fahrbetriebs in regelmäßigen Abständen ansprechend auf eventuelle Außentemperaturänderungen. Anschließend wird das Gebläse 38 geschwindigkeitsabhängig, d.h. abhängig vom Ausgangssignal des Sensors 22 zum Erfassen der Fahrgeschwindigkeit, angesteuert, d.h. je größer die Fahrgeschwindigkeit ist, desto höher wird die Gebläsespannung und damit die Lüfterdrehzahl n gewählt. Dabei kann beispielsweise ein lineare Kennlinie verwendet werden, d.h. die Lüfterdrehzahl n wird linear entsprechend der Erhöhung der Fahrgeschwindigkeit erhöht.

Jedoch wird dadurch, dass die Steuereinrichtung 24 zuerst das Heizelement 39 ansteuert und das Gebläse 38 erst anschließend startet, wenn eine vorgegebene Totzeit t_{TOT} abgelaufen ist, in der das Heizelement 39 aufgeheizt wurde, die Funktion der Luftversorgungseinrichtung für einen Fahrzeugsitz für den Sitzinsassen erst mit Verzögerung spür- und erlebbar bzw, ist bei kurz oder zu kurz gewählter Totzeit t_{TOT} eine Aufheizung des Luftstroms noch nicht optimal und der Luftstrom fühlt sich deshalb zu Beginn noch etwas kühl an, was zu Zugerscheinungen führen kann.

Daher wird im bevorzugten Ausführungsbeispiel der Erfindung darauf abgestellt, diese spürbare Verzögerung bis zum Einsetzen der Belüftung aufgrund einer Totzeit t_{TOT} bzw. Zugerscheinungen aufgrund zu kurzer Totzeit t_{TOT} zu vermeiden. Zudem ist die Totzeit t_{TOT} konstant und nicht von den Fahrzeugrahmenbedingungen abhängig, was zu unangenehmer Ausblaslufttemperatur führen kann.

Dazu wird erfindungsgemäß der Steuereinrichtung 24 von einem nicht gezeigten Verriegelungseinrichtung des Fahrzeugs bei Entriegeln des Fahrzeugs, von einem Verdeckschalter bei seiner Betätigung zum Öffnen, und/oder vergleichbaren Einrichtungen, nach deren Betätigung ein Betrieb der Luftversorgungseinrichtung für einen Fahrzeugsitz durch einen Sitzinsassen gewünscht sein könnte, mit einem Informationssignal versorgt, aufgrund dessen die Steuereinrichtung 24 das Heizelement 39 unabhängig von einem Einschaltsignal für die Luftversorgungseinrichtung für eine Fahrzeugsitz durch einen Sitzinsassen vorkonditioniert, so dass sofort nach Einschalten der Luftversorgungseinrichtung für einen Fahrzeugsitz ein Belüften mit warmer Luft möglich ist. Dabei erfolgt die Vorkonditionierung des Heizelements 39 entweder gesteuert durch einen in der Luftversorgungseinrichtung für einen Fahrzeugsitz befindlichen, mit der Steuereinrichtung 24 verbundenen Temperatursensor 23, ein Thermostat, oder zeitlich getaktet, unter Verwendung eines beispielsweise in die Steuereinrichtung 24 oder die Luftversorgungseinrichtung für einen Fahrzeugsitz integrierten Taktgebers. Bei Verwendung des Temperatursensors 23 oder des Thermostats wird das Heizelement 39 durch die Steuereinrichtung 24 beispielsweise bei Erreichen einer vorgegebenen ersten Temperaturschwellenwerts ausgeschaltet und bei Unterschreiten eines vorgegebenen zweiten Temperaturschwellenwerts wieder eingeschaltet. Ansonsten erfolgt das Ein- und Ausschalten des Heizelements 39 durch die Steuereinrichtung 24 ansprechend auf ein Ein- bzw. Ausschaltsignal vom Taktgeber.

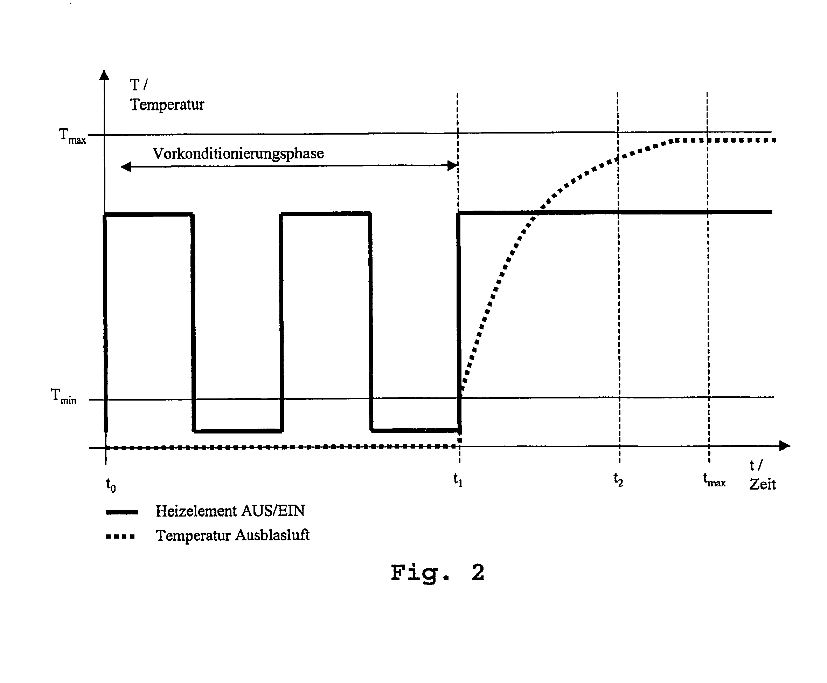

In Fig. 2 ist der Verlauf einer Heizkennlinie, d.h. eines Ein-/Ausschaltzustands, des Heizelements 39 sowie der zugehörigen Temperatur der Ausblasluft bei der erfindungsgemäßen Luftversorgungseinrichtung für einen Fahrzeugsitz über die Zeit gezeigt. Zu einem Zeitpunkt t₀, zu dem eine Bedingung zur Vorkonditionierung des Heizelements 39 erfüllt ist, wie beispielsweise einem Entriegeln des Fahrzeugs, einem Öffnen einer Fahrzeugtür, einem Betätigen eines Verdeckschalters zum Öffnen des Verdecks, u.ä. wird das Heizelement 39 eingeschaltet. Dann wird während einer Vorkonditionierungsphase vor einer Aktivierung der Luftversorgungseinrichtung für einen Fahrzeugsitz durch einen Sitzinsassen oder automatisch das Heizelement 39 zyklisch bei Verwendung eines Taktgebers jeweils für einen vorbestimmten Zeitraum, ansonsten bei Über- bzw. Unterschreiten einer vorgegebenen ersten bzw. Temperaturschwellenwerts durch die Steuereinrichtung 24 ein- und dann wieder ausgeschaltet wird. Am Ende der Vorkonditionierungsphase zu einem Zeitpunkt t₁ werden das Heizelement 39 und das Gebläse 38 nach einem Einschalten bzw. Aktivieren der Luftversorgungseinrichtung für einen Fahrzeugsitz durch die Steuereinrichtung 24 eingeschaltet. Zu diesem Zeitpunkt hat die Ausblasluft bereits eine Temperatur Tₘᵢₙ, ab der der Sitzinsasse die Ausblasluft nicht mehr als kühl empfindet. Bis zu einem Zeitpunkt t₂ nimmt die Temperatur der Ausblasluft aufgrund des kontinuierlichen Betriebs des Heizelements 39 kontinuierlich zu, bis eine angestrebte Solltemperatur Tₛₒₗₗ erreicht ist. Bis zu einem Zeitpunkt tₘₐₓ, d.h. einer theoretisch maximalen Zeit der Vorkonditionierung, kann eine maximale Temperatur Tₘₐₓ erreicht werden.

Durch diese vorstehend beschriebene, erfindungsgemäße Luftversorgungseinrichtung für eine Fahrzeugsitz ist insbesondere durch die erfindungsgemäße Steuereinrichtung 24 zur Ansteuerung des Heizelements 39 sofort aktiv und für den Sitzinsassen erlebbar. Vor allem wird beim Einschalten aufgrund der Vorkonditionierung des Heizelements 39 bereits eine optimale Wärmeleistung erzielt.

Vorteilhafterweise berücksichtigt die Steuereinrichtung 24 das Ausgangssignal vom Temperatursensor 20, das über die Außentemperatur informiert, zu einer Entscheidung, ob die vorstehend beschriebene Vorkonditionierung des Heizelements 39 erfolgen soll. Wenn ein vorbestimmter Grenzwert der Außentemperatur, der beispielsweise länderspezifisch gewählt sein kann und ab dem davon ausgegangen wird, dass ein Sitzinsasse die Luftversorgungseinrichtung für einen Fahrzeugsitz einschalten und eine Beheizung der Ausblasluft wünschen könnte, unterschritten wird, erfolgt die vorstehend beschriebene Vorkonditionierung des Heizelements 39. Ebenso kann der gegenwärtige Innenraumtemperatur für eine Entscheidung über eine Vorkonditionierung mit berücksichtigt werden, da beispielsweise auch bei einer sehr hohen Innenraumtemperatur davon ausgegangen werden kann, dass ein Sitzinsasse keine Beheizung der Ausblasluft wünschen wird.

Aufgrund dieser Berücksichtigung der Fahrzeugrahmenbedingungen, wie beispielsweise Fahrzeugaußen- und/oder -innentemperatur, kann eine für den Sitzinsassen angenehme Ausblaslufttemperatur erhalten werden, durch die ein Zugempfinden durch den Sitzinsassen ausgeschlossen wird.

Somit ist durch die erfindungsgemäße Luftversorgungseinrichtung für einen Fahrzeugsitz gemäß dem vorstehend beschriebenen Ausführungsbeispiel die Wirkung der Luftversorgungseinrichtung für einen Fahrzeugsitz für einen Sitzinsassen unmittelbar nach dem Einschalten aktiv und positiv erlebbar. Bereits direkt nach dem Einschalten wird durch die Vorkonditionierung eine optimale Wärmeleistung unter Berücksichtigung der Fahrzeugrahmenbedingungen erhalten.

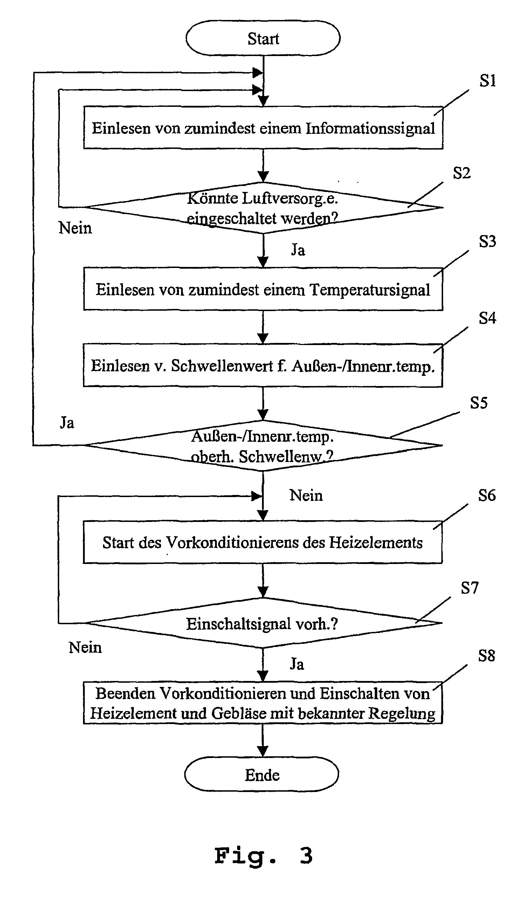

Nachstehend wird nun unter Bezugnahme auf Fig. 3 auf den Ablauf des erfindungsgemäßen Verfahrens zum Betreiben einer Luftversorgungseinrichtung für eine Fahrzeugsitz eingegangen.

Das erfindungsgemäße Verfahren zum Betreiben einer Luftversorgungseinrichtung für einen Fahrzeugsitz startet jedesmal dann, wenn davon ausgegangen werden kann, dass das Heizelement 39 zu kalt ist, um eine minimale Temperatur der Ausblasluft Tₘᵢₙ sicherzustellen. Dies ist beispielsweise bei jedem Motorneustart der Fall, da das Fahrzeug dann in der Regel für einen gewissen Zeitraum gestanden ist und das Heizelement 39 nicht beheizt wurde.

Nach Start des erfindungsgemäßen Verfahrens zum Betreiben einer Luftversorgungseinrichtung für einen Fahrzeugsitz werden zunächst in einem Schritt S1 Informationssignale von einer Entriegelungseinrichtung, einem Türsensor und/oder einem Verdeckschalter, usw. eingelesen. Anhand zumindest eines dieser Informationssignale wird in einem Schritt S2 entschieden, ob eine Situation, wie beispielsweise ein Entriegeln des Fahrzeugs, ein Öffnen einer Fahrzeugtür, ein Betätigen eines Verdeckschalters zum Öffnen des Verdecks, o.ä., vorliegt, auf die folgend ein Einschalten der Luftversorgungseinrichtung für einen Fahrzeugsitz entweder manuell durch einen Sitzinsassen oder automatisch erfolgen könnte. Wenn dies nicht der Fall ist, kehrt der Ablauf zu Schritt S1 zurück. Wenn dies jedoch der Fall ist, d.h. das Fahrzeug entriegelt wurde, eine Fahrzeugtür geöffnet wurde und/oder ein Verdeckschalter zum Öffnen des Verdecks betätigt wurde o.ä., wird zu einem Schritt S3 fortgeschritten, in dem eine Außen- und/oder eine Innenraumtemperatur des Fahrzeugs eingelesen wird, die über einen Außen- und/oder Innenraumtemperatursensor erfasst wurden. Alternativ kann dieser Schritt S3 auch bereits in Verbindung mit Schritt S1 erfolgen. Nachfolgend wird in Schritt S4 ein in einer beispielsweise in der Steuereinrichtung 24 ausgebildeten Speichereinrichtung abgespeicherter Schwellenwert für die Außen- und/oder Innenraumtemperatur eingelesen. Dieser Schwellenwert für die Außen- und/oder Innenraumtemperatur ist derart gewählt, dass davon ausgegangen werden kann, dass ein Sitzinsasse aufgrund der sehr hohen Temperatur keine Beheizung der Ausblasluft wünschen wird. Auch der Schritt S4 kann bereits zu Beginn des Verfahrens erfolgen, wird jedoch bevorzugt ebenso wie Schritt S3 aus verfahrensökonomischen Gründen erst durchgeführt, wenn in S2 entschieden wurde, dass eine Situation vorliegt, in der die Luftversorgungseinrichtung für einen Fahrzeugsitz eingeschaltet werden könnte.

Anschließend wird in einem Schritt S5 ermittelt, ob die in Schritt S3 eingelesene Außen- und/oder Innenraumtemperatur oberhalb des in Schritt S4 eingelesenen Schwellenwerts für die Außen- und/oder Innenraumtemperatur liegt. Wenn dies der Fall ist, d.h. davon ausgegangen wird, dass eine Beheizung der Ausblasluft nicht erforderlich ist, kehrt der Ablauf zu Schritt S1 zurück, ansonsten wird zu Schritt S6 fortgeschritten.

In Schritt S6 beginnt ein Vorkonditionieren des Heizelements 39, das aus einem zyklischen Ein- und Ausschalten des Heizelements entweder ansprechend auf einen Taktgeber oder ein Über- bzw. Unterschreiten eines ersten bzw. zweiten in einer weiteren Speichereinrichtung abgespeicherten Temperaturschwellenwerts am Temperatursensor 23 oder Thermostat besteht, so dass bei einem nachfolgenden Einschalten eine minimale Temperatur der Ausblasluft Tₘᵢₙ sichergestellt ist, die ausreichend ist, dass der Sitzinsasse keinen Zug empfindet. Anschließend wird in einem Schritt S7 überprüft, ob ein manuelles oder automatisches Einschaltsignal für die Luftversorgungseinrichtung für einen Fahrzeugsitz vorliegt. Wenn dies nicht der Fall ist, wird zu Schritt S6 zurückgekehrt und die Vorkonditionierung des Heizelements 39 fortgesetzt. Wenn hingegen ein Einschaltsignal (manuell oder automatisch) vorliegt, wird zu einem Schritt S8 fortgeschritten, in dem die Vorkonditionierung beendet wird und das Heizelement 39 sowie das Gebläse 38 eingeschaltet werden. Die Funktion des Heizelements 39 und der Gebläses 38 werden auf bekannte Weise geschwindigkeits- und außentemperaturabhängig geregelt. Das erfindungsgemäße Verfahren wird beendet.

Durch das vorstehend beschriebene Verfahren zum Betreiben einer Luftversorgungseinrichtung für einen Fahrzeugsitz wird durch die Vorkonditionierung des Heizelements in Fällen, in denen nach einem Motorstart des Fahrzeugs ein Einschalten der Luftversorgungseinrichtung für eine Fahrzeugsitz erwartet werden kann, sichergestellt, dass bei einem Einschalten der Sitzinsasse sofort eine Wirkung des Einschaltvorgangs erlebt und aufgrund des vorkonditionierten Heizelements auch kein Zugempfinden verspürt. Durch die Berücksichtigung der Außen- und/oder Innenraumtemperatur für eine Entscheidung über eine Vorkonditionierung des Heizelements wird zudem dafür gesorgt, dass in Fällen, in denen in der Regel kein Beheizen der Ausblasluft erforderlich sein wird, keine unnötige Energie für eine Vorkonditionierung des Heizelements verwendet wird.

Es wäre auch denkbar, bei der erfindungsgemäßen Vorrichtung und dem erfindungsgemäßen Verfahren optional Einrichtungen und Schritte vorzusehen, durch die ergänzend zur Außen- und/oder Innenraumtemperatur beispielsweise auch eine Sonneneinstrahlung, Temperaturwerte nahe dem vorgegebenen, abgespeicherten Schwellenwert, o.ä. für eine Entscheidung, ob eine Situation vorliegt, in der eine Vorkonditionierung gewünscht sein könnte, berücksichtigt werden.

## Patentansprüche

1. Luftversorgungseinrichtung für einen Fahrzeugsitz (12) mit einer im oberen Bereich des Fahrzeugsitzes (12) vorgesehenen Luftausströmöffnung (18), über die der Kopf-, Schulter- und Nackenbereich des Sitzinsassen zur Verminderung von unerwünschten Zuglufterscheinungen mit einem Luftstrom (L) beaufschlagbar ist, und wobei der Luftstrom (L) mittels einer Steuereinrichtung (24) durch Regelung einer Lüfterdrehzahl (n) eines Gebläses (38) regelbar und über ein Heizelement (39) erwärmbar ist,
**dadurch gekennzeichnet, dass**
der Steuereinrichtung (24) zumindest ein Informationssignal von einer Schließeinrichtung, einem Türsensor und/oder einem Verdeckschalter, das über ein Entriegeln des Fahrzeugs, ein Öffnen einer Fahrzeugtür und/oder ein Betätigen eines Verdeckschalters zum Öffnen des Verdecks informiert, sowie zumindest ein Temperatursignal von einem Temperatursensor (20), das über die Außen- und/oder Innenraumtemperatur informiert, zugeführt sind, und
die Steuereinrichtung (24) ansprechend auf das Informationssignal und das Temperatursignal eine Vorkonditionierung des Heizelements (39) unabhängig von einem Einschalten der Luftversorgungseinrichtung veranlasst.

2. Luftversorgungseinrichtung nach Anspruch 1,
**dadurch gekennzeichnet, dass**
die Steuereinrichtung (24) die Vorkonditionierung des Heizelements (39) nur dann veranlasst, wenn das Informationssignal aussagt, dass ein Entriegeln des Fahrzeugs, ein Öffnen einer Fahrzeugtür und/oder ein Betätigen eines Verdeckschalters zum Öffnen des Verdecks erfolgt ist, und das Temperatursignal aussagt, dass die Außentemperatur und/oder die Innenraumtemperatur zumindest einen in einer Speichereinrichtung vorabgespeicherten Schwellenwert unterschreitet.

3. Luftversorgungseinrichtung nach Anspruch 2,
**dadurch gekennzeichnet, dass**
die Steuereinrichtung (24) das Heizelement (39) zur Vorkonditionierung nach einem Einschalten ansprechend auf das Informationssignal und das Temperatursignal ansprechend auf ein Taktsignal von einem Taktgeber zyklisch ein- und ausschaltet.

4. Luftversorgungseinrichtung nach Anspruch 2,
**dadurch gekennzeichnet, dass**
die Steuereinrichtung (24) das Heizelement (39) zur Vorkonditionierung nach einem Einschalten ansprechend auf das Informationssignal und das Temperatursignal ansprechend auf ein Ausgangssignal eines Temperatursensors (23) oder ein Thermostats sich zyklisch wiederholend bei Erreichen eines vorgegebenen ersten Temperaturschwellenwerts ausschaltet und bei Unterschreiten eines vorgegebenen zweiten Temperaturschwellenwerts wieder einschaltet, wobei der erste Temperaturschwellenwert oberhalb des zweiten Temperaturschwellenwerts liegt.

5. Luftversorgungseinrichtung nach einem der Ansprüche 1 bis 4,
**dadurch gekennzeichnet, dass**
die Steuereinrichtung (24) ansprechend auf ein Einschaltsignal zum Einschalten der Luftversorgungseinrichtung die Vorkonditionierung des Heizelements (39) beendet und das Heizelement (39) und das Gebläse (38) einschaltet und geschwindigkeitsabhängig ansteuert.

6. Verfahren zum Betreiben einer Luftversorgungseinrichtung für einen Fahrzeugsitz (12) mit einer im oberen Bereich des Fahrzeugsitzes (12) vorgesehenen Luftausströmöffnung (18), über die der Kopf-, Schulter- und Nackenbereich des Sitzinsassen zur Verminderung von unerwünschten Zuglufterscheinungen mit einem Luftstrom (L) beaufschlagbar ist, und wobei der Luftstrom (L) mittels einer Steuereinrichtung (24) durch Regelung einer Lüfterdrehzahl (n) eines Gebläses (38) regelbar und über ein Heizelement (39) erwärmbar ist,
**gekennzeichnet durch** die folgenden Schritte,
(S1) Einlesen zumindest eines Informationssignals von einer Schließeinrichtung, einem Türsensor und/oder einem Verdeckschalter, das über ein Entriegeln des Fahrzeugs, ein Öffnen einer Fahrzeugtür und/oder ein Betätigen eines Verdeckschalters zum Öffnen des Verdecks informiert
(S2) Entscheiden, ob eine Situation vorliegt, auf die folgend ein Einschalten der Luftversorgungseinrichtung entweder manuell oder automatisch erfolgen könnte, wenn dies nicht der Fall ist, Zurückkehren zu S1, ansonsten
(S3) Einlesen zumindest einer Außen- und/oder Innenraumtemperatur des Fahrzeugs,
(S4) Einlesen zumindest eines abgespeicherten Schwellenwerts für die Außen- und/oder Innenraumtemperatur,
(S5) Ermitteln, ob die in S3 eingelesene Außen- und/oder Innenraumtemperatur oberhalb des in S4 eingelesenen Schwellenwerts liegt,
wenn dies der Fall ist, Zurückkehren zu S1, ansonsten (S6) Vorkonditionieren des Heizelements (39) **durch** zyklisches Ein- und Ausschalten des Heizelements, anschließend
(S7) Überprüfen, ob ein manuelles oder automatisches Einschaltsignal für die Luftversorgungseinrichtung vorliegt, wenn dies nicht der Fall ist, Zurückkehren zu S6, ansonsten
(S8) Beenden des Vorkonditionierens und Einschalten des Heizelements (39) und des Gebläses (38) und Regeln der Funktion des Heizelements (39) und des Gebläses (38) geschwindigkeits- und außentemperaturabhängig.

7. Verfahren nach Anspruch 6,
**dadurch gekennzeichnet, dass**
das zyklische Ein- und Ausschalten des Heizelements (39) ansprechend auf ein Taktsignal von einem Taktgeber erfolgt.

8. Verfahren nach Anspruch 6,
**dadurch gekennzeichnet, dass**
das zyklische Ein- und Ausschalten des Heizelements (39) ansprechend auf ein Ausgangssignal eines Temperatursensors (23) oder ein Thermostats derart erfolgt, dass bei Erreichen eines vorgegebenen ersten Temperaturschwellenwerts ausgeschaltet und bei Unterschreiten eines vorgegebenen zweiten Temperaturschwellenwerts wieder eingeschaltet wird, wobei der erste Temperaturschwellenwert oberhalb des zweiten Temperaturschwellenwerts liegt.

## Claims

1. An air supply mechanism for a seat (12) having an air outlet opening (18) provided in the upper area of the seat (12) by which it is possible to apply an air flow (L) to the head, shoulder and neck area of the seat occupant in order to exclude undesirable drafts, it being possible to control the air flow (L) by controlling a fan speed (n) of a fan (38) by means of a control device (24), and to heat it by means of a heating element (39),
**characterised in that**
at least one information signal from a closing device, a door sensor and/or a convertible top switch which provides information on the unlocking of the vehicle, the opening of a vehicle door and/or the actuation of a switch for opening the convertible top, and at least one temperature signal from a temperature sensor (20) which provides information on the exterior and/or interior temperature are fed to the control device (24), and the control device (24) activates the pre-conditioning of the heating element (39) in response to the information signal and the temperature signal independently of the switching-on of the air supply mechanism.

2. An air supply mechanism in accordance with claim 1,
**characterised in that**
the control device (24) activates the pre-conditioning of the heating element (39) only when the information signal indicates that the vehicle has been unlocked, the vehicle door opened and/or a convertible top switch actuated to open the convertible top, and the temperature signal indicates that the exterior temperature and/or the interior temperature has fallen below at least one threshold value previously stored in a storage device.

3. An air supply mechanism in accordance with claim 2,
**characterised in that**
for pre-conditioning after switching on in response to the information signal and the temperature signal, the control device (24) switches the heating element (39) cyclically on and off in response to a clock signal from a clock generator.

4. An air supply mechanism in accordance with claim 2,
**characterised in that**
for pre-conditioning after switching on in response to the information signal and the temperature signal, the control device (24) switches the heating element (39) off in a repeated cyclical manner in response to an output signal from a temperature sensor (23) or a thermostat when the temperature reaches a first predetermined threshold value, and switches it on again when the temperature falls below a predetermined second threshold value, the first temperature threshold value lying above the second temperature threshold value.

5. An air supply mechanism in accordance with one of claims 1 to 4,
**characterised in that**
the control device (24) terminates the pre-conditioning of the heating element (39) in response to a switch-on signal for switching on the air supply mechanism, and switches on the heating element (39) and the fan (38) and actuates them dependent on speed.

6. A process for operating an air supply mechanism for a seat (12) having an air outlet opening (18) provided in the upper area of the seat (12) by which it is possible to apply an air flow (L) to the head, shoulder and neck area of the seat occupant in order to exclude undesirable drafts, it being possible to control the air flow (L) by controlling a fan speed (n) of a fan (38) by means of a control device (24), and to heat it by means of a heating element (39),
**characterised by** the following steps:
(S 1) reading-in of at least one information signal from a closing device, a door sensor and/or a convertible top switch which provides information on the unlocking of the vehicle, the opening of a vehicle door and/or the actuation of a convertible top switch for opening the convertible top;
(S2) decision as to whether the current situation might be followed by the manual or automatic switching on of the air supply mechanism, if this is not the case return to S1, otherwise;
(S3) reading-in of at least one exterior and/or interior vehicle temperature; (S4) the reading-in of at least one stored threshold value for the exterior and/or interior temperature;
(S5) determining of whether the exterior and/or interior temperature read in at S3 lies above the threshold value read in at S4,
if this is the case return to S1, otherwise
(S6) pre-conditioning of the heating element (39) by the cyclical switching on and off of the heating element, then
(S7) verification of whether a manual or automatic switching-on signal for the air supply mechanism is present,
if this is not the case return to S6, otherwise
(S8) termination of the pre-conditioning, switching on of the heating element (39) and the fan (38) and controlling of the function of the heating element (39) and the fan (38) dependent on speed and exterior temperature.

7. A process in accordance with claim 6,
**characterised in that**
the heating element (39) is switched on and off cyclically in response to a clock signal from a clock generator.

8. A process in accordance with claim 6,
**characterised in that**
the heating element (39) is switched on and off cyclically in response to an output signal from a temperature sensor (23) or a thermostat in such a manner that when the temperature reaches a predetermined first threshold value it is switched off and when the temperature falls below a predetermined second threshold value it is switched on again, the first temperature threshold value lying above the second temperature threshold value.

## Revendications

1. Système d'alimentation en air pour un siège de véhicule (12) avec un orifice de sortie d'air (18) prévu dans la zone supérieure du siège de véhicule (12), par le biais duquel orifice la zone de tête, des épaules et de la nuque du passager peut être soumise à un flux d'air (L) pour réduire les apparitions indésirables de courants d'air, et le flux d'air (L) pouvant être réglé au moyen d'un dispositif de commande (24) par réglage d'un nombre de tours (n) d'un ventilateur (38) et pouvant être chauffé par le biais d'un élément chauffant (39), **caractérisé en ce que**
au dispositif de commande (24) sont conduits au moins un signal d'information par un dispositif de fermeture, un capteur de porte et/ou un interrupteur de commande de capote, qui informe d'un déverrouillage du véhicule, d'une ouverture d'une porte du véhicule et/ou d'un actionnement d'un interrupteur de commande de capote pour l'ouverture de la capote, ainsi qu'au moins un signal de température d'un capteur de température (20), qui informe de la température extérieure et/ou de la température ambiante intérieure, et
le dispositif de commande (24) répondant au signal d'information et au signal de température, déclenche un préconditionnement de l'élément chauffant (39) indépendamment d'une mise en marche du système d'alimentation en air.

2. Système d'alimentation en air selon la revendication 1, **caractérisé en ce que** le dispositif de commande (24) ne déclenche le préconditionnement de l'élément chauffant (39) que lorsque le signal d'information annonce qu'un déverrouillage du véhicule, une ouverture d'une porte du véhicule et/ou un actionnement d'un interrupteur de commande de capote pour l'ouverture de la capote est effectué, et que le signal de température annonce que la température extérieure et/ou la température ambiante intérieure passe au moins en dessous d'une valeur seuil préenregistrée dans une mémoire.

3. Système d'alimentation en air selon la revendication 2, **caractérisé en ce que** le dispositif de commande (24) met en marche et arrête de manière cyclique l'élément chauffant (39) pour le préconditionnement après une mise en marche en réponse au signal d'information et au signal de température répondant à un signal d'horloge d'une horloge.

4. Système d'alimentation en air selon la revendication 2, **caractérisé en ce que** le dispositif de commande (24) arrête de manière cyclique l'élément chauffant (39) pour le préconditionnement après une mise en marche en réponse au signal d'information et au signal de température répondant à un signal de sortie d'un capteur de température (23) ou d'un thermostat se répétant de manière cyclique lorsqu'une première valeur seuil de température donnée est atteinte et lorsqu'il y a passage en dessous d'une seconde valeur seuil de température donnée, la première valeur seuil de température étant située au-dessus de la seconde valeur seuil de température.

5. Système d'alimentation en air selon l'une quelconque des revendications 1 à 4, **caractérisé en ce que** le dispositif de commande (24) met fin au préconditionnement de l'élément chauffant (39) en réponse à un signal de mise en marche pour mettre en marche le système d'alimentation en air et met en marche l'élément chauffant (39) et le ventilateur (38) et les commande en fonction de la vitesse.

6. Procédé pour l'exploitation d'un système d'alimentation en air pour un siège de véhicule (12) avec un orifice de sortie d'air (18) prévu dans la zone supérieure du siège de véhicule (12), par le biais duquel la zone de tête, des épaules et de la nuque du passager peut être soumise à un flux d'air (L) pour réduire les apparitions indésirables de courants d'air, et le flux d'air (L) pouvant être réglé au moyen d'un dispositif de commande (24) grâce au réglage d'un nombre de tours (n) d'un ventilateur (38) et pouvant être chauffé par le biais d'un élément chauffant (39),
**caractérisé par** les étapes suivantes,
(S1) lecture d'au moins un signal d'information d'un dispositif de fermeture, d'un capteur de porte et/ou d'un interrupteur de commande de capote, qui informe d'un déverrouillage du véhicule, d'une ouverture d'une porte du véhicule et/ou d'un actionnement d'un interrupteur de commande de capote pour l'ouverture de la capote
(S2) décision, s'il y a présence d'une situation, laquelle pourrait engendrer une mise en marche du dispositif d'alimentation en air soit manuellement soit automatiquement, si cela n'est pas le cas, retour au point S1, sinon
(S3) lecture d'au moins une température extérieure et/ou d'une température ambiante intérieure du véhicule,
(S4) lecture d'au moins une valeur seuil enregistrée pour la température extérieure et/ou la température ambiante intérieure,
(S5) détermination pour savoir si la température extérieure et/ou la température ambiante intérieure lue en S3 se situe au-dessus de la valeur seuil lue en S4,
si cela est le cas, retour au point S1, sinon
(S6) préconditionnement de l'élément chauffant (39) par une mise en marche et un arrêt cycliques de l'élément chauffant, puis
(S7) vérification de la présence d'un signal manuel ou automatique de mise en marche pour le système d'alimentation en air, si cela n'est pas le cas, retour au point S6, sinon
(S8) fin du préconditionnement et mise en marche de l'élément chauffant (39) et du ventilateur (38) et réglage de la fonction de l'élément chauffant (39) et du ventilateur (38) en fonction de la vitesse et de la température extérieure.

7. Procédé selon la revendication 6, **caractérisé en ce que** la mise en marche et l'arrêt cycliques de l'élément chauffant (39) s'effectuent en réponse à un signal d'horloge d'une horloge.

8. Procédé selon la revendication 6, **caractérisé en ce que** la mise en marche et l'arrêt cycliques de l'élément chauffant (39) s'effectuent en réponse à un signal de sortie d'un capteur de température (23) ou d'un thermostat de façon à ce qu'il y ait arrêt lorsqu'une première valeur seuil de température donnée est atteinte et remise en marche lorsqu'il y a passage en dessous d'une seconde valeur seuil de température donnée, la première valeur seuil de température étant située au-dessus de la seconde valeur seuil de température.
